# EUROPEAN PATENT APPLICATION

(11) **EP 4 787 881 A1**
(43) Date of publication of application: **05.08.2026**
(21) Application number: 25223673.2
(22) Date of filing: 16.12.2025
(51) Int. Cl.: H04N 23/62, G06F 1/16

(54) **INFORMATION PROCESSING DEVICE, INFORMATION PROCESSING SYSTEM, CONTROL METHOD FOR INFORMATION PROCESSING DEVICE, AND STORAGE MEDIUM**

(30) Priority: 29.01.2025 JP 2025012544
(71) Applicant: Canon Kabushiki Kaisha, Tokyo, 146-8501 (JP)
(72) Inventor: ONO, Tadayoshi, Tokyo, 146-8501 (JP)
(74) Representative: TBK

(57) **Abstract**

An information processing device (102) includes operation means (204) for receiving a user operation; acquisition means (203) for acquiring relationship information on a relationship between a user and a function executed if the operation means is operated by the user; specification means (206) for specifying the user who uses the own device (102); and execution means (206) for executing the function associated with the specified user in the relationship information if the operation means is operated by the user. The operation means includes first operation means (204b, 204c, 204d) and second operation means different from the first operation means. The relationship information includes information on a relationship between the user and a function to be executed if the user operates the first operation means, and information on a relationship between the user and a function to be executed if the user operates the second operation means.

## Description

### TECHNICAL FIELD

The present disclosure relates to an information processing device, an information processing system, a control method for an information processing device, and a storage medium.

### BACKGROUND

In the related art, there are information processing devices such as imaging devices that include an operation unit that receives user operations and executes functions if the operation unit is operated. There are also technologies for executing a function corresponding to a user if the operation unit is operated. For example, Japanese Patent Laid-Open No. 2013-172432 discloses determining which function operation button to display on a user interface according to an input frequency of camera operation instructions if the user interface that receives a camera operation is displayed on a head-mounted display.

### SUMMARY

Here, a plurality of users may use the same information processing device. In such a case, if only a function suitable for specific users that are some of the plurality of users is set as a function to be executed if the operation unit of the information processing device is operated, there is concern that the convenience of users different from the specific users among the plurality of users may be impaired.

The present disclosure is directed to realize execution of a function corresponding to a user who has operated an operation unit of an information processing device among a plurality of users who use the information processing device having a plurality of functions.

The present disclosure in its first aspect provides an information processing device as specified in claim 1. Optional features are specified in claims 2 to 5.

The present disclosure in its second aspect provides an information processing system as specified in claim 6. Optional features are specified in claims 7 to 9.

The present disclosure in its third aspect provides a control method for an information processing device as specified in claim 10.

The present disclosure in its fourth aspect provides a storage medium as specified in claim 11.

According to the present disclosure, it is possible to realize execution of functions corresponding to the user who has operated the operation unit of the information processing device having a plurality of functions among the plurality of users who use the information processing device.

Features of the present disclosure will become apparent from the following description of embodiments with reference to the attached drawings. The following description of embodiments is described by way of example.

### BRIEF DESCRIPTION OF THE DRAWINGS

Fig. 1A is a diagram showing an example configuration of an imaging system, and Fig. 1B is a diagram showing a configuration of a glass device.
Fig. 2 is a diagram showing a functional configuration of a camera and a functional configuration of the glass device.
Fig. 3 is a diagram showing a configuration of an operation reception unit.
Fig. 4 is a diagram showing a captured image.
Fig. 5 is a flowchart showing a flow of function setting processing.
Figs. 6A and 6C are diagrams showing a scheme for registering the glass device with the camera.
Figs. 7A and 7C are diagrams showing a scheme in which a user selects a camera function to be executed if the operation reception unit is operated.
Fig. 8 is a flowchart diagram showing user specifying processing.
Fig. 9 is a diagram showing a user management table.
Fig. 10 is a flowchart illustrating a flow of execution processing.
Fig. 11 is a diagram showing information displayed on a display of the glass device by the execution processing being performed.
Fig. 12 is a diagram showing a captured image.
Fig. 13 is a diagram showing a user management table.
Fig. 14 is a diagram showing information displayed on the display of the glass device by the execution processing being performed.

### DESCRIPTION OF THE EMBODIMENTS

Hereinafter, embodiments of the present disclosure will be described with reference to the drawings.

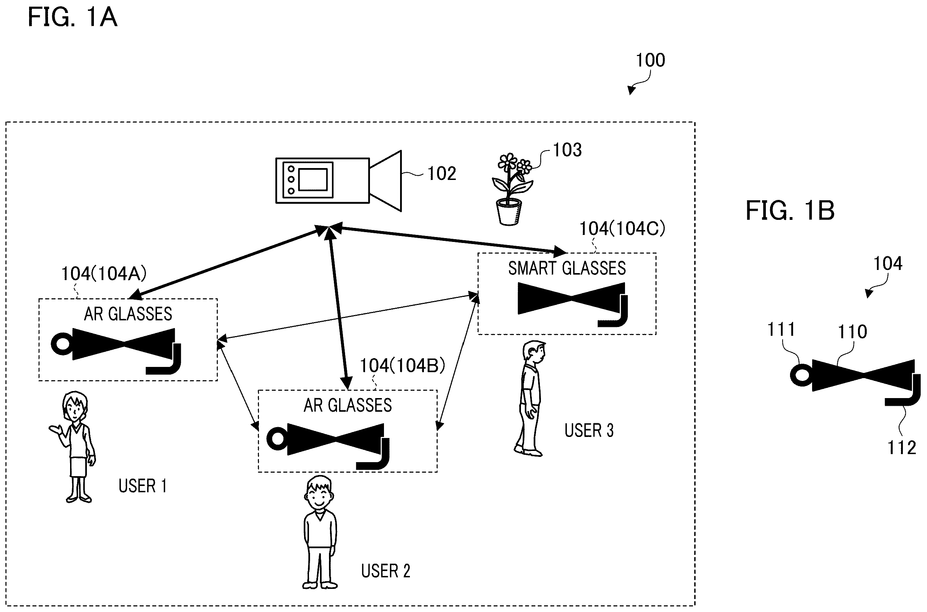

Fig. 1A is a diagram showing an example configuration of an imaging system 100. The imaging system 100, which is an example of an information processing system, includes a camera 102 and a plurality of glass devices 104.

In the present embodiment, a plurality of users take turns using the camera 102. In this case, a function of the camera 102 corresponding to a user who has operated the camera 102 among the plurality of users who use the camera 102 is executed. Further, in the present embodiment, the function to be executed if the camera 102 is operated is displayed on each glass device 104.

The camera 102, which is an example of an information processing device, images a subject 103. In the present embodiment, three users including User 1, User 2, and User 3 take turns using the camera 102.

The glass device 104, which is an example of a user terminal, is a terminal device worn by the user to display information. In the imaging system 100 of the present embodiment, the glass device 104 is provided for each user who uses the camera 102. More specifically, the imaging system 100 is provided with a glass device 104A used by User 1, a glass device 104B used by User 2, and a glass device 104C used by User 3. Examples of the glass device 104 include augmented reality (AR) glasses and smart glasses. Hereinafter, it is assumed that the glass devices 104A and the glass devices 104B are AR glasses, and the glass device 104C is smart glasses.

Fig. 1B is a diagram showing a configuration of the glass device 104.

The glass device 104 includes a display 110, a camera 111, and an input and output unit 112.

The display 110, as an example of display means, displays information. In the present embodiment, by the information being displayed on the glass device 104 in a state in which the user wears the glass device 104, the displayed information appears in a field of view of the user.

The camera 111, as an example of imaging means, images a direction to which a gaze of a user wearing the glass device 104 is directed.

The input and output unit 112 receives sound input and outputs sound. User 1, User 2, and User 3 perform voice communication with each other through the glass devices 104.

A configuration of the glass device 104 may be different depending on each glass device 104. For example, the glass device 104C may not be provided with the camera 111.

In the present embodiment, it is assumed that User 1, User 2, and User 3 use the camera 102 according to their respective roles for the purpose of capturing videos of movies or the like. More specifically, it is assumed that User 1 is a person in charge of a light amount of an illumination, a direction of the illumination and the like, User 2 is a person in charge of adjustment of image quality, and User 3 is a person in charge of operations such as adjustment of an angle of the camera 102 or shooting of the camera 102. However, the users of the imaging system 100 are not limited to the above example. The users of the imaging system 100 may include users such as a focus person, a director, and a camera assistant. In addition, the imaging system 100 may include an illumination operator for each illumination. Further, the imaging system 100 may be provided with a glass device 104 for each user who uses the camera 102. Further, a user of the imaging system 100 may also be a single user.

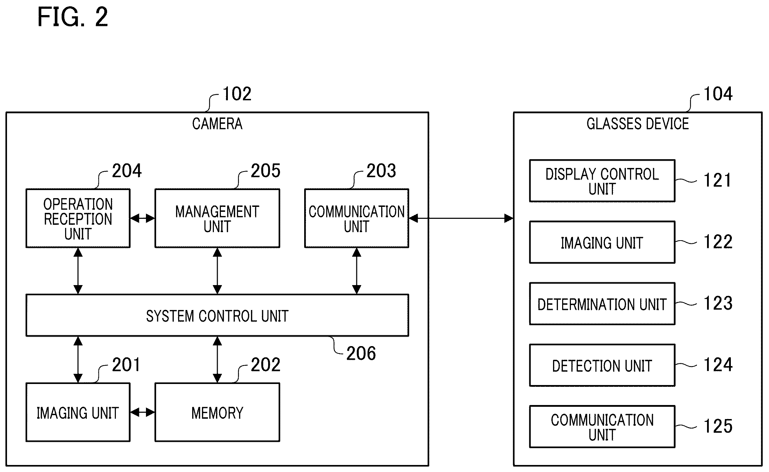

Fig. 2 is a diagram showing a functional configuration of the camera 102 and a functional configuration of the glass device 104.

The camera 102 includes an imaging unit 201, a memory 202, a communication unit 203, an operation reception unit 204, a management unit 205, and a system control unit 206.

The imaging unit 201, which is an example of imaging means, images the subject 103. The memory 202 stores information such as images captured by the imaging unit 201. The communication unit 203, which is an example of acquisition means, performs communication with an external device such as the glass device 104 through wireless communication technology or the like and transmits and receives information to and from the external device. The operation reception unit 204, which is an example of operation means, receives a user operation with respect to the camera 102. Examples of the operation reception unit 204 include a touch panel and push buttons. Further, examples of the operation received by the operation reception unit 204 include operations regarding various settings of the camera 102. The management unit 205 manages the function to be executed if the operation reception unit 204 is operated, for each user. The system control unit 206, which is an example of execution means, includes a CPU, ROM, RAM, and the like, and the CPU loads a program stored in the ROM to a work region in the RAM and executes the program to control an entire operation of the camera 102. Further, the system control unit 206 executes the program stored in the ROM to realize respective processing of the present embodiment to be described later. The RAM loads constants, variables, and programs read from the ROM, which are used during an operation of the system control unit 206.

The glass device 104 includes a display control unit 121, an imaging unit 122, a determination unit 123, a detection unit 124, and a communication unit 125.

The communication unit 125 communicates with an external device such as the camera 102 using wireless communication technology or the like, and transmits and receives information to and from the external device. The display control unit 121, which is an example of display control means, displays information acquired by the glass device 104 through the communication unit 125, information generated in the glass device 104, and the like on the display 110. The imaging unit 122 images a direction to which a gaze of the user wearing the glass device 104 is directed. The determination unit 123 determines whether the user wearing the glass device 104 is using the camera 102. The detection unit 124 detects the camera 102 and the operation reception unit 204 of the camera 102 appearing the image captured by the imaging unit 122.

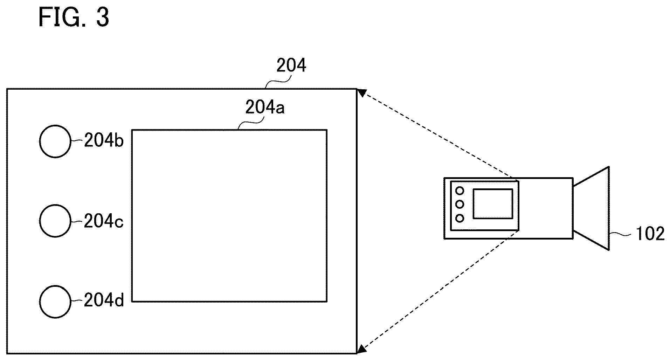

Fig. 3 is a diagram showing a configuration of the operation reception unit 204 of the camera 102. In the present embodiment, the operation reception unit 204 of the camera 102 includes a touch panel 204a, a button 204b, a button 204c, and a button 204d.

The touch panel 204a displays information corresponding to user operations. For example, the touch panel 204a displays, for example, a menu screen for receiving various settings related to the camera 102 according to user operations. In the present embodiment, the system control unit 206 controls the information displayed on the touch panel 204a.

The button 204b, the button 204c, and the button 204d are push buttons that accept user operations. Hereinafter, if the button 204b, the button 204c, and the button 204d are described particularly without distinction, the buttons may simply be referred to as a "button." The button is also regarded as an operation unit that receives user operations.

When a button of the camera 102 is operated, the function of the camera 102 corresponding to whether the operated button is the button 204b, the button 204c, or the button 204d is executed. Further, in the present embodiment, even if the same button on the camera 102 is operated, different functions are executed depending on whether User 1, User 2, or User 3 operates the button of the camera 102.

Next, the image captured by the imaging unit 122 of the glass device 104 will be described.

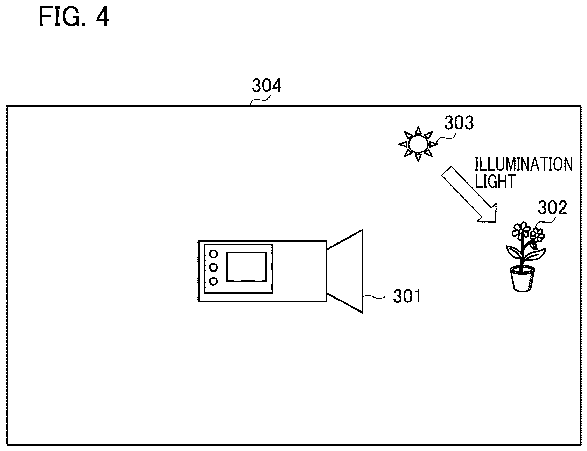

For example, when User 1 wearing the glass device 104A looks at the camera 102 and the subject 103 (see Figs. 1A and 1B), the imaging unit 122 of the glass device 104A performs imaging. In this case, a captured image 304 as illustrated in Fig. 4 is generated. In the captured image 304, a camera region 301 that is a display region of the camera 102, a subject region 302 that is a display region of the subject 103, and an illumination region 303 that is a display region of an illumination remotely controlled by User 1 are shown. This captured image 304 corresponds to a scene shown in a field of view of User 1.

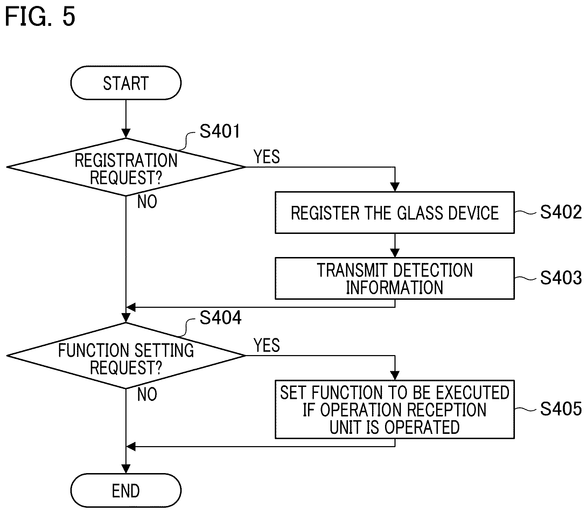

Fig. 5 is a flowchart illustrating a flow of function setting processing. The function setting processing is processing in which the camera 102 sets a function to be executed for each user if the operation reception unit 204 is operated. In the present embodiment, for example, the function setting processing is started at predetermined time intervals. The predetermined time interval may be any time interval or may be, for example, one second.

The system control unit 206 of the camera 102 determines whether there has been a registration request of the glass device 104 with the camera 102 (step (which may hereinafter be referred to as "S") S401). The system control unit 206 determines that there has been a registration request of the glass device 104 if the operation reception unit 204 for requesting registration of the glass device 104 with the camera 102 is operated by the user. Further, the system control unit 206 determines that there has been a registration request of the glass device 104 if information indicating that the registration of the glass device 104 with the camera 102 is requested has been received from the glass device 104 via the communication unit 203.

If there is a registration request of the glass device 104 with the camera 102 (Yes in S401), the system control unit 206 registers the glass device 104, which is a request target, with the camera 102 (S402).

The system control unit 206 transmits detection information stored in the memory 202 to the glass device 104 registered in step S402 (S403). The detection information is information that is used by the glass device 104 to detect the approach to the camera 102 if the glass device 104 approaches the camera 102. Examples of the detection information may include information used to detect the camera 102 from the image obtained in a case in which the glass device 104 images the camera 102 as the subject. Further, examples of the information used to detect the camera 102 from the image obtained in a case in which the glass device 104 images the camera 102 as the subject may include an image showing an appearance of the camera 102 and a 3D model of the camera 102. In addition, an identifier of the camera 102 in a case in which the glass device 104 and the camera 102 perform communication may be the detection information.

If there is no registration request of the glass device 104 with the camera 102 (No in S401), or after Step S403, the process proceeds to the next step. The system control unit 206 determines whether there has been a function setting request to be executed if the operation reception unit 204 is operated (S404). The system control unit 206 determines that there has been a function setting request if an operation with respect to the operation reception unit 204 for requesting a setting of the function to be executed if the operation reception unit 204 has been operated is performed by the user. In addition, if the system control unit 206 receives information indicating that a function setting is requested from the glass device 104 via the communication unit 203, the system control unit 206 determines that there has been a function setting request.

If there is no function setting request (No in S404), the function setting processing ends.

If there is the function setting request (Yes in S404), the system control unit 206 sets the function to be executed if the operation reception unit 204 is operated (S405). More specifically, the system control unit 206 sets the function to be executed if the operation reception unit 204 is operated, in accordance with the operation of the operation reception unit 204 by the user.

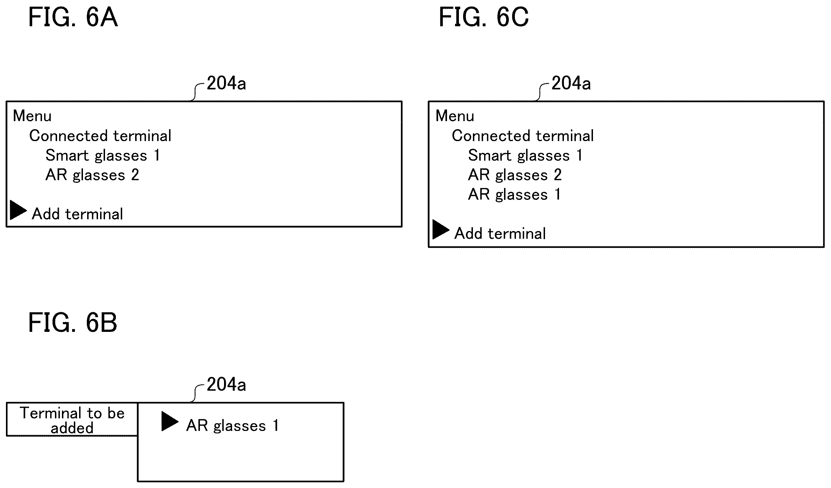

Figs. 6A and 6C are diagrams illustrating a scheme for registering the glass device 104 with the camera 102.

Hereinafter, an example in which the glass device 104A worn by User 1 is registered with the camera 102 will be described.

First, when the user operates the touch panel 204a of the camera 102, a registration reception screen is displayed on the touch panel 204a, as illustrated in Fig. 6A. This registration reception screen is a screen for receiving the registration of the glass device 104 with the camera 102. The registration reception screen shows text "Connected Terminal," "Smart Glasses 1," and "AR Glasses 2." This indicates that "Smart Glasses 1" and "AR Glasses 2" are already registered with the camera 102. "Smart Glasses 1" corresponds to the glass device 104C and "AR Glasses 2" corresponds to glass device 104B.

Here, when the user selects "Add Terminal" on the touch panel 204a, it is determined that there has been the registration request of the glass device 104 with the camera 102 in the function setting processing (Yes in S401 of Fig. 5). In this case, as illustrated in Fig. 6B, a list of devices that can be registered with the camera 102 is displayed on the touch panel 204a. On the touch panel 204a, devices that are capable of communicating with the camera 102 and whose communication is permitted by the camera 102 may be displayed as the devices that can be registered with the camera 102. In the illustrated example, text "AR Glasses 1" is displayed as the device that can be registered with the camera 102. "AR Glasses 1" corresponds to the glass device 104A.

Here, when the user selects "AR Glasses 1" on the touch panel 204a, the system control unit 206 registers the glass device 104A with the camera 102 (S402 of Fig. 5). In this case, as illustrated in Fig. 6C, "AR Glasses 1" is displayed as the "Connected Terminal" on the touch panel 204a.

The registration of the glass device 104 with the camera 102 may be performed by any user.

Also, although the registration of the glass device 104 with the camera 102 has been described in the above-described example, the disclosure is not limited thereto.

For example, instead of the glass device 104, a user who will use the camera 102 may be registered with the camera 102. In this case, the target registered with the camera 102 may be user identification information for identifying the user such as a user account.

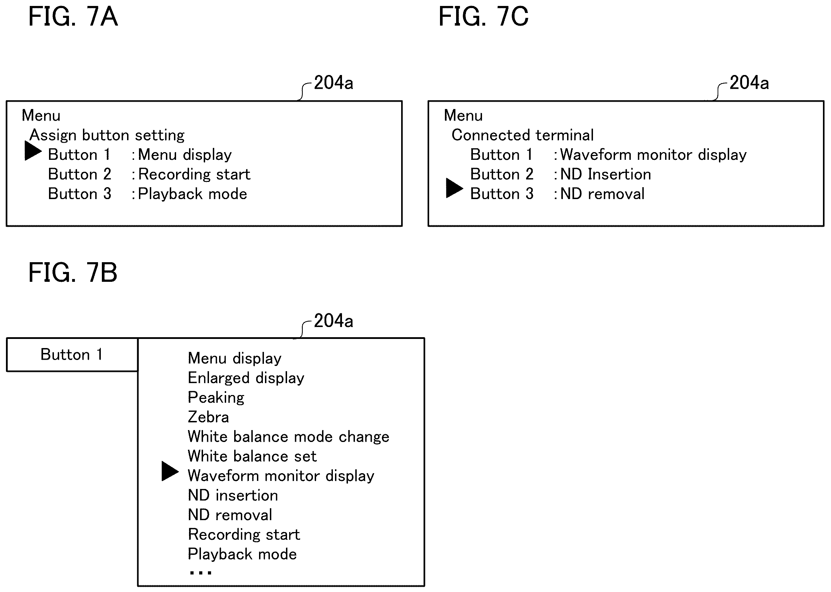

Figs. 7A and 7C are diagrams illustrating a scheme in which the user selects a function of the camera 102 to be executed if the operation reception unit 204 is operated.

Hereinafter, an example in which User 1 selects a function of the camera 102 to be executed if the operation reception unit 204 is operated will be described.

First, when User 1 operates the touch panel 204a of the camera 102, a function reception screen is displayed on the touch panel 204a, as illustrated in Fig. 7A. The function reception screen is a screen for receiving a selection of the function of the camera 102 to be executed if the operation reception unit 204 is operated. Further, the function reception screen illustrated in Fig. 7A is a screen for receiving a selection of the function of the camera 102 to be executed if the operation reception unit 204 is operated by User 1. On the function reception screen, the function to be executed if each of the buttons 204b, 204c, and 204d of the operation reception unit 204 is operated is shown.

In the illustrated example, text "Button 1: Menu display" is shown. This means that the function of the camera 102 to be executed if Button 1 is operated is to display a menu screen on the touch panel 204a. Button 1 indicates the button 204b.

In the shown example, the text "Button 2: Start Recording" is also shown. This means that the function of the camera 102 executed if Button 2 is operated is to start recording. Button 2 indicates the button 204c.

In the shown example, the text "Button 3: Playback Mode" is also shown. This means that the function of the camera 102 executed if Button 3 is operated is to play back a video. Button 3 indicates the button 204d.

The assignment of the function to each button illustrated in Fig. 7A is an initial setting.

Here, for example, when User 1 selects "Button 1" on the function reception screen, it is determined that there is the function setting request in the function setting processing (Yes in S404). In this case, as illustrated in Fig. 7B, a list of functions that can be executed if the operation reception unit 204 is operated is displayed. User 1 selects the function from the screen so that a function frequently used if the camera 102 is used is executed if a button of the operation reception unit 204 is operated.

As described above, since User 1 is responsible for the illumination, it is necessary to check the brightness of the video captured by the camera 102. Therefore, it is assumed that User 1 selects "Waveform monitor display" on the touch panel 204a. The "Waveform monitor display" is a function to display a waveform monitor on a UI of the camera 102. In this case, the system control unit 206 sets the function of the camera 102 to be executed if User 1 operates the button 204b to Waveform monitor display (S405 of Fig. 5). As illustrated in Fig. 7C, the function associated with "Button 1" on the function reception screen is changed from "Menu display" to "Waveform monitor display."

Further, User 1 selects function from the screen for "Button 2" and "Button 3" similarly to "Button 1" so that the function frequently used if the camera 102 is used is executed of the button of the operation reception unit 204 is operated. Accordingly, a function of the camera 102 to be executed if User 1 operates the button 204c is set to ND insertion and a function associated with "Button 2" on the function reception screen is changed to "ND Insertion." In addition, the function of the camera 102 to be executed if User 1 operates the button 204d is set to ND removal, and the function associated with "Button 3" on the function reception screen is changed to "ND removal."

As described above, the function reception screen illustrated in Fig. 7A is a function reception screen in which User 1 is a target. If User 2 or User 3 sets the function corresponding to the button of the operation reception unit 204, a function reception screen in which a user who is an operation target is a target is used. Thus, even if User 2 or User 3 has set the function corresponding to the button of the operation reception unit 204, the setting of User 1 shown in Fig. 7C is maintained.

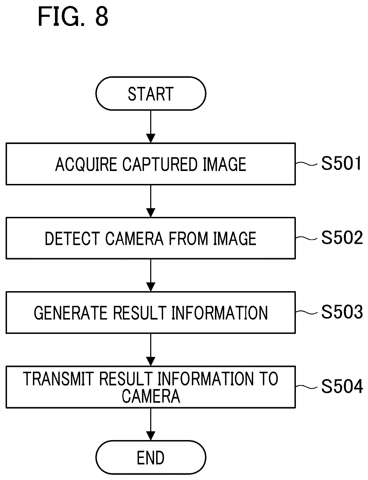

Fig. 8 is a flowchart diagram showing usage specifying processing. The usage specifying processing is processing in which the glass device 104 specifies whether the user of the glass device 104 is using the camera 102. In the present embodiment, the usage specifying processing is started each time the glass device 104 captures an image.

The glass device 104 acquires an image through the imaging performed by the imaging unit 122 (S501).

The detection unit 124 of the glass device 104 detects the camera 102 from the image acquired in step 501 (S502). The detection unit 124 detects the camera 102 using the detection information. The detection unit 124 transmits information indicating a detection result to the display control unit 121 and the determination unit 123. Examples of the information indicating the detection result include information indicating a region in the image in which the camera 102 is shown.

The determination unit 123 determines whether or not the user wearing the glass device 104 is using the camera 102 and generates result information indicating a determination result and a likelihood of the determination result (S503).

When the user is using the camera 102, it is assumed that the camera 102 is located near the user and is in a direction of the gaze of the user. Therefore, for example, if a ratio of the display area of the camera 102 of shown in the image acquired in step 501 to a display area of the image is equal to or greater than a predetermined value, the determination unit 123 determines that the user is using the camera 102. The predetermined value may be any value, but is, for example, 10%. Further, in the present embodiment, the ratio of the display area of the camera 102 shown in the image to the display area of the image is used as the likelihood of the determination result.

An example of the result information will be described. It is assumed that in the usage specifying processing of the glass device 104A, the captured image 304 illustrated in Fig. 4 is obtained. It is also assumed that a ratio of the display area of the camera region 301 to the display area of the captured image 304 is 15%. In this case, the determination unit 123 determines that User 1 is using the camera 102. The determination unit 123 generates result information indicating that User 1 is using the camera 102 as the determination result and that the likelihood of the determination result is 15%.

The glass device 104 transmits the result information generated in step 503 to the camera 102 (S504).

In the present embodiment, the usage specifying processing is performed for each glass device 104, and result information of each glass device 104 is transmitted to the camera 102. Accordingly, which user of the glass device 104 is using the camera 102 is specified by the camera 102.

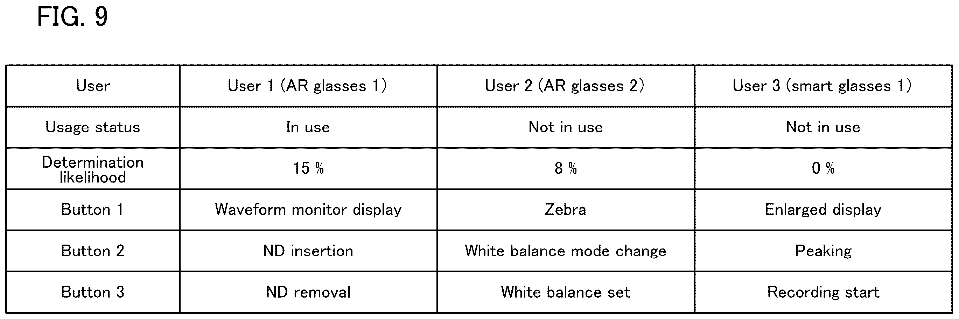

Fig. 9 is a diagram showing a user management table. The user management table is a table for managing information on users. The user management table is stored in the memory 202 of the camera 102.

The user management table shows "User 1 (AR Glasses 1)," "User 2 (AR Glasses 2)," and "User 3 (Smart Glasses 1)" as "Users." That is, in the camera 102, the user is associated with the glass device 104 worn by the user. Further, for each "User," "Usage Status," "Determination likelihood," "Button 1," "Button 2," and "Button 3" are shown in a user management table.

The content of the user management table will be described in detail.

In the "Usage Status," the determination result specified from the result information with respect to whether or not the user is using the camera 102 is shown. "In Use" shown in the "Usage Status" means that the determination unit 123 has determined that the user is using the camera 102. Further, "Not in Use" shown in the "Usage Status" means that the determination unit 123 has determined that the user is not using the camera 102.

In the "Determination likelihood," a value specified from the result information as the likelihood of the determination result of the determination unit 123 is shown.

"8%" is shown in the "Determination likelihood" of "User 2." This means that the ratio of the display area of the camera 102 shown in the captured image to the display area of the captured image obtained in the usage specifying processing of the glass device 104B is 8%. Accordingly, the determination unit 123 of the glass device 104B determines that User 2 is not using the camera 102.

Further, "0%" is shown in the "Determination likelihood" of "User 3." This means that the camera 102 is not shown in the captured image obtained in the usage specifying processing of the glass device 104C. Accordingly, the determination unit 123 of the glass device 104C determines that User 3 is not using the camera 102.

In "Button 1," the function to be executed if the button 204b is operated is shown. In the illustrated example, "Waveform monitor display" is shown in "Button 1" of "User 1," "Zebra" is shown in "Button 1" of "User 2," and "Enlarged display" is shown in "Button 1" of "User 3."

In "Button 2," the function to be executed if the button 204c is operated is shown. In the illustrated example, "ND insertion" is shown in "Button 2" of "User 1", "White balance mode change" is shown in "Button 2" of "User 2", and "Peaking" is shown in "Button 2" of "User 3".

In "Button 3", the function to be executed if the button 204d is operated is shown. In the illustrated example, "ND removal" is shown in "Button 3" of "User 1," "White balance set" is shown in "Button 3 of "User 2," and "Recording start" is shown in "Button 3" of "User 3"

When a function to be executed if the button is operated is newly set through operations with respect to the function reception screens (see Figs. 7A and 7C) of User 1 to User 3, the management unit 205 updates the content of the user management table in accordance with the new setting.

Further, each time new result information is acquired by the camera 102, the management unit 205 updates the content of the user management table to reflect the content of the acquired result information.

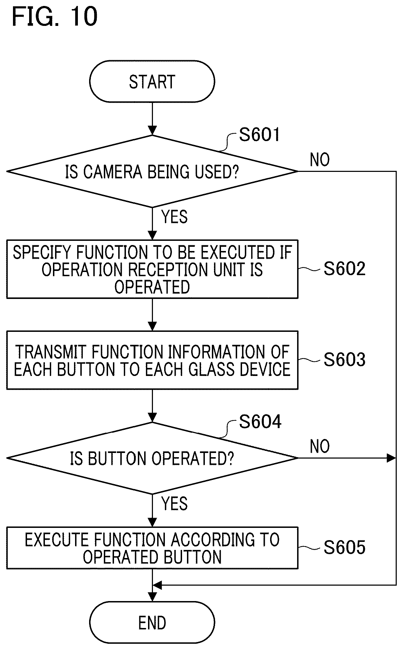

Fig. 10 is a flowchart illustrating a flow of the execution processing. The execution processing is processing in which the camera 102 executes a function corresponding to the user who has operated the operation reception unit 204 if the operation reception unit 204 is operated. In the present embodiment, for example, the execution processing is started each time a predetermined period of time elapses. The predetermined period of time may be any duration, but is, for example, 0.1 seconds.

The system control unit 206 of the camera 102 determines whether or not the camera 102 is being used by the user (S601). The system control unit 206 makes the determination in step 601 based on whether or not there is a user whose "Usage Status" in the user management table is indicated as "In Use." If the camera 102 is not being used by any user (No in S601), the execution processing ends.

If the camera 102 is being used by the user (Yes in S601), the system control unit 206 specifies the function to be executed if the operation reception unit 204 is operated (S602). More specifically, the system control unit 206 specifies the function associated with the user specified as using the camera 102 as the function to be executed if the operation reception unit 204 is operated. The functions associated with the user are functions indicated in "Button 1," "Button 2," and "Button 3" associated with the target "User" in the user management table.

If "In Use" is indicated in "Usage Status" for a plurality of "Users" in the user management table, the system control unit 206 specifies the "User" associated with the highest "Determination likelihood" as a user who is using the camera 102. Thus, the system control unit 206 can also be regarded as a specifying unit that specifies the user who is using the camera 102.

In the illustrated example, since "In Use" is indicated only in the "Usage Status" for "User 1," it is assumed hereinafter that the system control unit 206 specifies the function to be executed if the operation reception unit 204 is operated as the function associated with User 1.

The system control unit 206 transmits information indicating the function of each button specified in step 602 to each glass device 104 (S603). As will be described later in detail, this allows information indicating the function of each button specified in step 602 to be displayed on the display 110 of each glass device 104.

The system control unit 206 determines whether or not a button on the operation reception unit 204 has been operated (S604). If the button has not been operated, the execution processing ends.

Further, if it is determined that the button has been operated (Yes in S604), the system control unit 206 executes the function specified in step 602 according to the operated button (S605). More specifically, the system control unit 206 executes "Waveform monitor display" if it is determined that the button 204b has been operated. Further, the system control unit 206 executes "ND insertion" if it is determined that button 204c has been operated. Further, the system control unit 206 executes "ND removal" if it is determined that the button 204d has been operated.

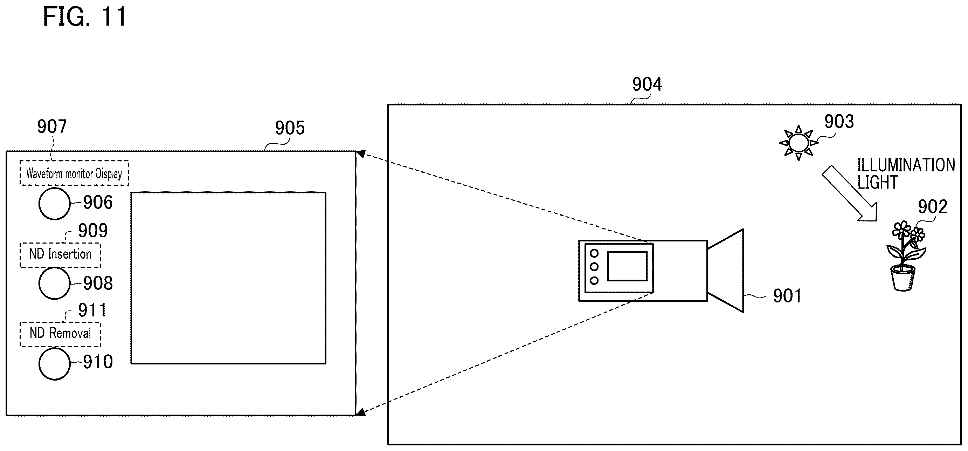

Fig. 11 is a diagram showing information displayed on the display 110 of the glass device 104A by execution processing being performed.

When User 1 wearing the glass device 104A looks at the camera 102 and the subject 103, if imaging is performed by the imaging unit 122 of the glass device 104A, a captured image is generated. Further, in this case, when the execution processing is performed, the information transmitted from the camera 102 in step 603 of the execution processing is acquired by the glass device 104A. In this case, the display control unit 121 of the glass device 104A displays a generated captured image 904 on the display 110 , as illustrated in Fig. 11.

In the captured image 904, a camera region 901 that is the display region of the camera 102, a subject region 902 that is the display region of the subject 103, and an illumination region 903 that is the display region of the illumination remotely operated by User 1 are shown. The captured image 904 corresponds to a scene shown in a field of view of User 1.

Further, in an operation region 905, which is a display region of the operation reception unit 204 within the camera region 901, the function of each button specified in step 602 of the execution processing is shown.

A first function information portion 907 is shown above a button 1 region 906, which is a display region of the button 204b within the operation region 905. The first function information portion 907 is information representing the function specified in the execution processing as the function to be executed if the button 204b is operated. In the illustrated example, text "Waveform monitor display" is shown in the first function information portion 907.

A second function information portion 909 is shown above a button 2 region 908, which is a display region of the button 204c within the operation region 905. The second function information portion 909 indicates information representing the function specified in the execution processing as the function to be executed if the button 204c is operated. In the illustrated example, text "ND insertion" is shown in the second function information portion 909.

A third function information portion 911 is shown above a button 3 region 910, which is a display region of the button 204d within the operation region 905. The third function information portion 911 is information representing the function specified in the execution processing to be executed if the button 204d has been operated. In the illustrated example, text "ND removal" is shown in the third function information portion 911.

Thus, the first function information portion 907, the second function information portion 909, and the third function information portion 911 are displayed in a superimposed manner on the captured image 904.

The system control unit 206 of the glass device 104A determines display positions of the first function information portion 907, the second function information portion 909, and the third function information portion 911 so that the function to be executed if the button of the operation reception unit 204 is operated is displayed near a display region of the button of the operation reception unit 204.

Similarly, the system control unit 206 of the glass device 104 different from the glass device 104A also displays the first function information portion 907, the second function information portion 909, and the third function information portion 911 in a superimposed manner on the captured image captured by the imaging unit 122 on the display 110.

The first function information portion 907, the second function information portion 909, and the third function information portion 911 may be displayed on the display 110 of the glass device 104 instead of the captured image being displayed. More specifically, the system control unit 206 may display the first function information portion 907, the second function information portion 909, and the third function information portion 911 near a region of the display 110 overlapping with the button of the camera 102 shown in a field of view of the user. Even in this case, because the first function information portion 907, the second function information portion 909, and the third function information portion 911 are displayed near the buttons of the camera 102 shown in a field of view of the user, the function of each button is easily recognized by the user.

For a user who is not using the camera 102, the camera 102 may not be present in a line of sight. Here, the system control unit 206 may display the first function information portion 907, the second function information portion 909, and the third function information portion 911 in a predetermined region of the display 110 in the glass device 104 worn by the user who is not viewing the camera 102. The predetermined area may be any area and may be, for example, any one of four corners of the display 110.

Next, the usage specifying processing (see Fig. 8) and the execution processing (see Fig. 10) to be performed when User 1 moves away from the camera 102 and User 2 approaches the camera 102 to operate the camera 102 with the passage of time will be described.

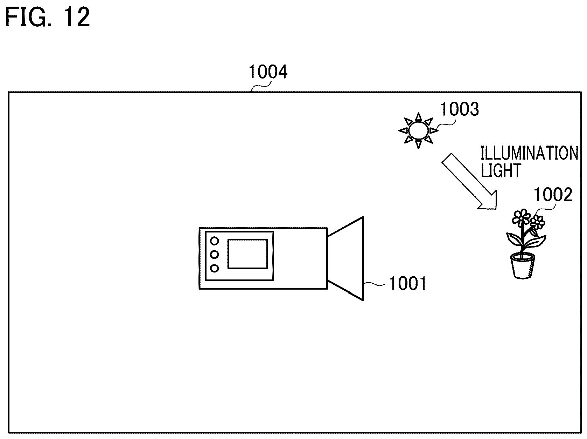

In the usage specifying processing of the glass device 104B, a captured image is acquired (S501), and the camera 102 is detected from the captured image (S502). Hereinafter, it is assumed that the captured image 1004 illustrated in Fig. 12 is acquired in step 501.

In the captured image 1004, a camera region 1001 that is the display region of the camera 102, a subject region 1002 that is the display region of the subject 103, and an illumination region 1003 that is the display region of the illumination remotely operated by User 1 are shown. The captured image 1004 corresponds to a scene shown in a field of view of User 2.

Hereinafter, it is assumed that the ratio of the display area of the camera region 1001 to the display area of the captured image 1004 is 15%. In this case, the determination unit 123 of the glass device 104B determines that User 2 is using the camera 102. The determination unit 123 generates result information indicating that User 2 is using the camera 102 as the determination result and that the likelihood of the determination result is 15% (S503). Further, the glass device 104 then transmits the generated result information to the camera 102 (S504).

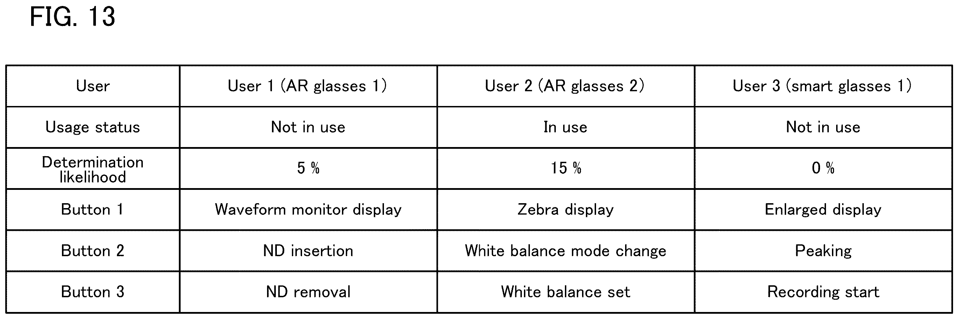

Further, the usage specifying processing is also executed for the glass device 104A and the glass device 104C, and the result information is transmitted to the camera 102. The management unit 205 of the camera 102 updates the user management table to the content shown in FIG. 13 based on the result information acquired for each glass device 104.

In the updated user management table, "Not in Use" is indicated in "User 1" and "User 3" in "Usage Status," and "In Use" is indicated in "User 2."

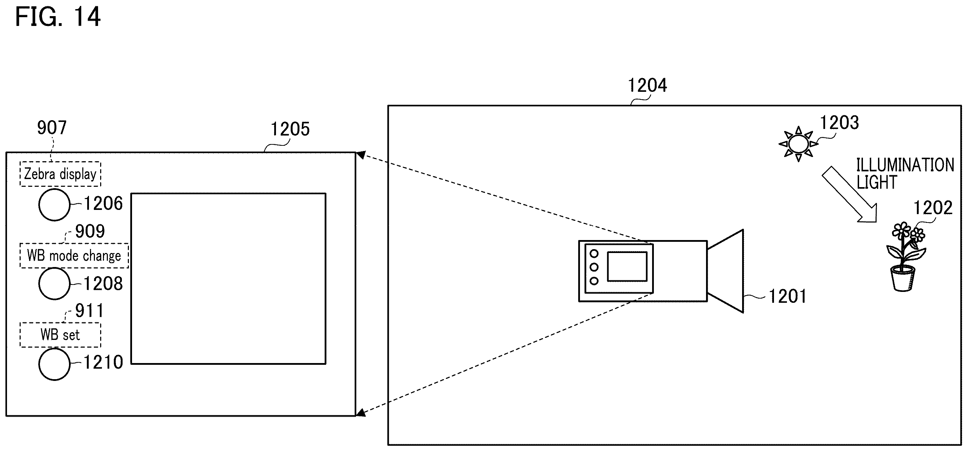

Next, the execution processing is performed. Based on the user management table illustrated in Fig. 13, it is determined that User 2 is using the camera 102 (Yes in S601), and the function to be executed if the operation reception unit 204 is operated is specified as the function associated with User 2 (S602). Further, the information indicating the function of each button specified in step 602 is transmitted to each glass device 104 (S603). Accordingly, the information illustrated in Fig. 14 is displayed on the display 110 of the glass device 104B.

As illustrated in Fig. 14, a captured image 1204 is displayed on the display 110 of the glass device 104B. The captured image 1204 is an image obtained by imaging in the imaging unit 122 of the glass device 104B when User 2 wearing the glass device 104B looks at the camera 102 and the subject 103. Further, a camera region 1201 that is the display region of the camera 102, a subject region 1202 that is the display region of the subject 103, and an illumination region 1203 that is the display region of the illumination remotely operated by User 1 are shown in the captured image 1204. This captured image 1204 corresponds to the scene seen in the field of view of User 2.

Further, in an operation region 1205, which is the display region of the operation reception unit 204 within the camera region 1201, the function of each button specified in step 602 of the execution processing is shown.

The first function information portion 907 is shown above the button 1 region 1206, which is the display region of the button 204b within the operation region 1205. In the illustrated example, text "Zebra display" is shown in the first function information portion 907.

The second function information portion 909 is shown above a button 2 region 1208, which is the display region of the button 204c within the operation region 1205. In the illustrated example, text "WB mode change" is shown in the second function information portion 909.

The third function information portion 911 is shown above a button 3 region 1210, which is the display region of the button 204d within the operation region 1205. In the illustrated example, text "WB set" is shown in the third function information portion 911.

Thus, on the display 110, the functions of "Button 1," "Button 2," and "Button 3" associated with "User 2" in the user management table (see Fig. 13) are shown.

Then, when any of the buttons on the operation reception unit 204 of the camera 102 is operated by User 2 (Yes in S604 of Fig. 10), the function corresponding to the operated button is executed (S605).

Thus, if the button on the operation reception unit 204 is operated, the camera 102 executes the function corresponding to the user who is using the camera 102. Therefore, if a plurality of users take turns using the camera 102, a function suitable for the user who is using the camera 102is executed if the button on the operation reception unit 204 is operated. Accordingly, the operability for users sharing the camera 102 is improved.

In the present embodiment, an example in which the system control unit 206 of the camera 102 transmits the information indicating the function of each button specified in step 602 of the execution processing to any glass device 104 registered with the camera 102 has been described, but the present disclosure is not limited thereto.

The system control unit 206 may transmit, to the glass device 104 that is an information transmission target, information indicating the function to be executed if the user wearing the glass device 104 has operated the operation reception unit 204. For example, even if the function to be executed if the operation reception unit 204 is operated is specified as the function associated with User 1, the system control unit 206 may transmit information indicating the function associated with User 2 to the glass device 104B. Further, the camera 102 may receive a setting for whether to transmit information indicating the function associated with the user who is using the camera 102 or whether to transmit information indicating the function associated with the user wearing the target glass device 104. This reception may be performed by a user operation in the touch panel 204a of the camera 102 or may be performed through communication from the glass device 104. Accordingly, the touch panel 204a can also be regarded as a reception unit. Further, if the reception is performed through communication from the glass device 104, when the reception unit (not shown) of the glass device 104 receives the setting of the user, the reception unit transmits information indicating the received content to the camera 102, thereby causing the camera 102 to execute the setting. Further, whether to transmit the information indicating the function associated with the user who is using the camera 102 or whether to transmit the information indicating the function associated with the user wearing the transmission target glass device 104 may be set for each user or may be set collectively for all users.

In the present embodiment, an example in which there are a plurality of buttons to which a function corresponding to a user are assigned has been described, but the present disclosure is not limited thereto.

There may be at least one operation unit such as the button to which the functions corresponding to a user is assigned.

In the present embodiment, an example in which the information processing device provided with the operation unit to which the functions corresponding to a user is assigned is the camera 102 has been described, but the present disclosure is not limited thereto.

The device provided with the operation unit to which the functions corresponding to a user is assigned may be a device other than the camera 102. For example, a function corresponding to a user may be assigned to the operation unit of a mobile body such as a drone or an autonomous moving vehicle. The camera 102 described above may also be provided on this mobile body. The device provided with the operation unit to which the functions corresponding to a user is assigned may be any device as long as the device is an information processing device.

As described above, in the present embodiment, the acquisition unit of the camera 102 acquires relationship information on a relationship between the user and the function to be executed if the operation unit is operated by the user for each of the plurality of users. Examples of the acquisition unit include the communication unit 203, the management unit 205, and the system control unit 206. Further, examples of the relationship information include information indicating a relationship between "User" and "Button 1," "Button 2" and "Button 3" in the user management table. The system control unit 206 executes the function associated with the user specified by the system control unit 206 in the relationship information if the operation unit is operated by the user.

In this case, the function corresponding to the user who has operated the operation unit of the camera 102 among a plurality of users who use the camera 102 having a plurality of functions is executed.

Further, in the present embodiment, the operation unit includes a first operation unit and a second operation unit different from the first operation unit. Examples of the first operation unit include the button 204b, the button 204c, and the button 204d. Examples of the second operation unit include a button different from the first operation unit among the button 204b, the button 204c, and the button 204d. The relationship information includes information on a relationship between the user and the function to be executed if the first operation unit is operated by the user, and information on a relationship between the user and a function to be executed if the second operation unit is operated by the user.

In this case, execution of a function corresponding to the operation unit operated by the user using the camera 102 among a plurality of operation units is realized.

Further, in the present embodiment, a reception unit that receives a setting of the function to be executed if the operation unit is operated by the user for each of a plurality of users is further included (see Figs. 7A and 7C). Examples of the reception unit include the touch panel 204a and the system control unit 206.

In this case, a function suitable for the user who has operated the operation unit of the camera 102 among the plurality of users who use the camera 102 having the plurality of functions is executed.

In the present embodiment, the acquisition unit acquires own-device information indicating that the own device is shown in a captured image obtained by imaging of a user terminal used by the user. Examples of the own-device information include result information. The system control unit 206 specifies the user who uses the own device from the own-device information.

In this case, the function corresponding to the user that is an owner of a user terminal that has imaged the camera 102 among the plurality of users who use the camera 102 having the plurality of functions is executed.

In the present embodiment, an example in which the detection information is information indicating the appearance of the camera 102 has been described, but the present disclosure is not limited thereto.

The detection information may be position information indicating a position of the camera 102. In this case, a detection unit (not shown) of the camera 102 detects the position of the camera 102 and generates position information indicating the detected position. Further, the system control unit 206 of the camera 102 transmits position information indicating a latest position of the camera 102 to each glass device 104 registered with the camera 102 at predetermined intervals (for example, every 1 second). Further, the detection unit 124 of the glass device 104 detects the position of the glass device 104. The detection unit 124 detects a distance from the glass device 104 to the camera 102 based on a relationship between the position of the camera 102 specified from the position information transmitted from the camera 102 and the position of the glass device 104, and transmits distance information indicating the detected distance to the camera 102. When the system control unit 206 of the camera 102 acquires the distance information for each glass device 104, the system control unit 206 may specify the user wearing the glass device 104 with the shortest distance to the camera 102 as the user who is using the camera 102.

Further, a detection unit (not shown) of the camera 102 may also specify radio wave strength in communication with each glass device 104. The system control unit 206 of the camera 102 may specify the user wearing the glass device 104 with the strongest radio wave strength as the user who is using the camera 102.

In other words, the system control unit 206 specifies the user who uses the own device based on a communication relationship or positional relationship between the own device and a user terminal used by each of the plurality of users. In this case, execution of a function corresponding to the user who is an owner of the user terminal having a specific communication relationship or positional relationship with the camera 102 among the plurality of users who use the camera 102 having the plurality of functions is executed.

Further, an image in which the user is shown may be acquired by the camera 102 for each user who uses the camera 102, allowing the user who uses the camera 102 to be registered with the camera 102. The system control unit 206 of the camera 102 may perform imaging at predetermined intervals, and if a user registered as the user of the camera 102 is shown in the captured image, the system control unit 206 may determine that this user is using the camera 102. Further, if a plurality of users registered as users of the camera 102 are shown in the image captured by the camera 102, it may be determined that the user having the largest display area among the plurality of users is using the camera 102.

In other words, the system control unit 206 specifies the user who uses the own device from the captured image obtained by imaging when the user is included in an angle of view of the imaging device. In this case, execution of a function corresponding to the user shown in the image captured by the camera 102 among the plurality of users who use the camera 102 having the plurality of functions is realized.

Further, the display control unit 121 displays, on the display 110, the captured image obtained by imaging when the operation unit is included in the angle of view of the imaging device of the user terminal, and information on the function associated with the user who uses the user terminal in the relationship information (see Fig. 11).

In this case, a function to be executed if the user operates the operation unit among a plurality of functions of the camera 102 is recognized by the user who uses the operation unit.

In the present embodiment, there are user terminals which are a first user terminal used by a first user and a second user terminal used by a second user. Examples of the first user may be User 1, User 2, and User 3. Further, examples of the second user may include a user different from the first user among User 1, User 2, and User 3. In some cases, the system control unit 206 that is the second user specifies the user using the camera 102. In this case, the display control unit 121 of the first user terminal displays the information on the function associated with the first user in the relationship information on the display 110 of the first user terminal.

In this case, even if the first user is not using the camera 102, function that are executed if the first user operates the operation unit among the plurality of functions of the camera 102 are recognized by the first user.

In some cases, the system control unit 206 specifies the user using the camera 102 as the second user. In this case, the display control unit 121 of the first user terminal displays, on the display 110 of the first user terminal, information on the function associated with the second user in the relationship information.

In this case, even if the first user is not using the camera 102, a function that is executed if the second user operates the operation unit among the plurality of functions of the camera 102 is recognized by the first user.

In some cases, the system control unit 206 specifies the user using the camera 102 as the second user. In this case, the reception unit receives a setting indicating which of the information on the function associated with the first user in the relationship information and the information on the function associated with the second user in the relationship information is displayed on the display 110 of the first user terminal.

In this case, if the first user is not using the camera 102, the function recognized by the first user can be switched between a function to be executed if the first user operates the operation unit and a function to executed if the second user operates the operation unit.

### <Other embodiments>

While the present disclosure has been described in detail based on preferred embodiments, the present disclosure is not limited to the specific embodiments, and various modifications that do not depart from the gist of the disclosure are also included in the present disclosure. Portions of the embodiments described above may be appropriately combined.

Further, the present disclosure includes a case in which a software program that realizes the functions of the above-described embodiment is supplied to a system or device including a computer capable of executing a program from a recording medium either directly or through wired/wireless communication, and the program is executed.

Accordingly, program code itself that is supplied to and installed in a computer to realize functional processing of the present disclosure on the computer also realizes the present disclosure. In other words, a computer program for realizing the functional processing of the present disclosure itself is included the present disclosure.

In this case, as long as functions of the program are included, a form of the program is not limited and may be object code, a program executed by an interpreter, or script data supplied to an OS.

Examples of the recording medium for supplying a program may include a magnetic recording medium such as a hard disk and a magnetic tape, an optical or magneto-optical storage medium, and a non-volatile semiconductor memory.

Further, as a method of supplying a program, it is conceivable to store a method in which a computer program forming the present disclosure is stored in a server on a computer network, and a client computer that has made a connection downloads the computer program and performs programing.

Embodiment(s) of the present disclosure can also be realized by a computer of a system or device that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or device by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. An information processing device (102) comprising:
operation means (204) configured to receive a user operation;
acquisition means (203) configured to acquire relationship information on a relationship between a user and a function executed if the operation means (204) is operated by the user, for each of a plurality of users;
specification means (206) configured to specify the user who uses the own device (102); and
execution means (206) configured to execute the function associated with the specified user in the relationship information if the operation means (204) is operated by the user,
wherein the operation means (204) includes first operation means (204b, 204c, 204d) and second operation means (204b, 204c, 204d) different from the first operation means, and
the relationship information includes information on a relationship between the user and a function to be executed if the first operation means is operated by the user, and information on a relationship between the user and a function to be executed if the second operation means is operated by the user.

2. The information processing device (102) according to claim 1, further comprising reception means (204a) configured to receive, for each of the plurality of users, a setting of the function to be executed if the operation means (204) is operated by the user.

3. The information processing device (102) according to claim 1 or 2, wherein the specification means (206) is configured to specify a user who uses the own device (102) based on a communication relationship or positional relationship between the own device (102) and a user terminal (104) used by each of the plurality of users.

4. The information processing device (102) according to any one of claims 1 to 3,
wherein the acquisition means
is configured to acquire own-device information indicating that the own device (102) is shown in a captured image obtained by imaging of a user terminal (104) used by the user; and
specify the user who uses the own device (102) based on the own-device information.

5. The information processing device (102) according to any one of claims 1 to 4, further comprising:
first imaging means (201) configured to image a subject,
wherein the specification means is configured to specify the user who uses the own device (102) based on a captured image obtained by imaging when the user is included in an angle of view of the first imaging means (201).

6. An information processing system (100) comprising:
the information processing device (102) according to any one of claims 1 to 5r; and
a user terminal (104) used by the user including:
second imaging means (122) configured to image a subject,
display means (110) configured to display information, and
display control means (121) configured to display, on the display means (110), a captured image obtained by imaging when the operation means (204) is included in an angle of view of the second imaging means (122) of the user terminal (104), and information on the function associated with the user who uses the user terminal (104) in the relationship information.

7. The information processing system (100) according to claim 6,
wherein the user terminal (104) includes a first user terminal (104A, 104B, 104C) used by a first user and a second user terminal (104A, 104B, 104C) used by a second user, and
wherein the display control means (121) of the first user terminal is configured to display, on the display means (110) of the first user terminal, information on the function associated with the first user in the relationship information if the user who uses the information processing device (102) is specified as the second user.

8. The information processing system (100) according to claim 6,
wherein the user terminal (104) includes a first user terminal (104A, 104B, 104C) used by a first user and a second user terminal (104A, 104B, 104C) used by a second user, and
wherein the display control means (121) of the first user terminal is configured to display, on the display means (110) of the first user terminal, information on the function associated with the second user in the relationship information if the user who uses the information processing device (102) is specified as the second user.

9. The information processing system (100) according to claim 6,
wherein the user terminal (104) includes a first user terminal (104A. 104B, 104C) used by a first user and a second user terminal (104A, 104B, 104C) used by a second user, and
wherein the information processing system (100) further comprising reception means (204a) configured to receive a setting for which of information on the function associated with the first user in the relationship information and information on the function associated with the second user in the relationship information is to be displayed on the display means (110) of the first user terminal if the user who uses the information processing device is specified as the second user.

10. A control method for an information processing device (102) including operation means (204) configured to receive a user operation, the control method comprising:
an acquisition step of acquiring relationship information on a relationship between a user and a function executed if the operation means (204) is operated by the user, for each of a plurality of users;
a specification step of specifying the user who uses the own device (102); and
an execution step of executing the function associated with the specified user in the relationship information if the operation means (204) is operated by the user,
wherein the operation means (204) includes first operation means (204b, 204c, 204d) and second operation means (204b, 204c, 204d) different from the first operation means, and
the relationship information includes information on a relationship between the user and a function to be executed if the first operation means is operated by the user, and information on a relationship between the user and a function to be executed if the second operation means is operated by the user.

11. A non-transitory storage medium storing a program of an information processing device (102) including operation means (204) configured to receive a user operation, the program causing a computer to perform each step of a control method for the information processing device (102), the method comprising:
an acquisition step of acquiring relationship information on a relationship between a user and a function executed if the operation means (204) is operated by the user, for each of a plurality of users;
a specification step of specifying the user who uses the own device (102); and
an execution step of executing the function associated with the specified user in the relationship information if the operation means (204) is operated by the user,
wherein the operation means (204) includes first operation means (204b, 204c, 204d) and second operation means (204b, 204c, 204d) different from the first operation means, and
the relationship information includes information on a relationship between the user and a function to be executed if the first operation means is operated by the user, and information on a relationship between the user and a function to be executed if the second operation means is operated by the user.
